# EUROPEAN PATENT SPECIFICATION

(11) **EP 3 270 257 B1**
(45) Date of publication and mention of the grant of the patent: **27.02.2019**
(21) Application number: 16201253.8
(22) Date of filing: 29.11.2016
(51) Int. Cl.: G06F 1/08, G06F 1/30

(54) **CLOCK ADJUSTMENT FOR VOLTAGE DROOP**
TAKTANPASSUNG FÜR SPANNUNGSABFALL
AJUSTEMENT D'HORLOGE POUR CHUTE DE TENSION

(30) Priority: 12.07.2016 US 201615208388; 15.09.2016 WO PCT/US2016/051814
(43) Date of publication of application: 17.01.2018
(73) Proprietor: Advanced Micro Devices, Inc., Santa Clara, CA 95054 (US)
(72) Inventor: KOMMRUSCH, Steven, Sunnyvale, CA 94088 (US); MEHRA, Amitabh, Sunnyvale, CA 94088 (US); BORN, Richard, Sunnyvale, CA 94088 (US); YOUNG, Bobby, Sunnyvale, CA 94088 (US)
(74) Representative: Brookes IP

(56) References cited:
- US-A1- 2004 119 521
- US-A1- 2004 183 613
- US-A1- 2012 187 991
- US-B1- 7 007 188

## Description

### BACKGROUND

### Description of the Related Art

A processor typically employs one or more clock signals to synchronize logic operations at modules of the processor, thereby preventing errors such as setup errors, race conditions, and the like. The maximum clock frequency that can be applied to a module depends at least in part on a supply voltage provided to the module that governs voltage thresholds for transistors of the module. However, a processor module sometimes experiences temporary reductions, referred to as voltage droops, in the supply voltage. Failure to adjust the clock frequency for the module can cause errors in the overall operation of the processor. Some processors account for voltage droop by generating a "spare" clock signal at a reduced frequency relative to a nominal clock frequency of the module clock signal, and in response to detecting a voltage droop temporarily replace the module clock signal with the spare clock signal. However, replacement of the clock signal can cause operational errors during the replacement, and can require complex circuitry to implement.

US 2004/183613 A1 and US 2012/187991 A1 disclose two methods for lower the clock frequency upon detected voltage droops.

The problems of the prior art are solved by the subject-matter in accordance with the appended claims 1- 8.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of a processor that adjusts a clock signal in response to a voltage droop by adjusting enable signals used to generate the clock signal in accordance with some embodiments.
FIG. 2 is a diagram illustrating an example of adjusting a clock signal at the processor of FIG. 1 by adjusting enable signals used to generate the clock signal in accordance with some embodiments.
FIG. 3 is a block diagram illustrating a portion of a clock generator of the processor of FIG. 1 in accordance with some embodiments.
FIG. 4 is a flow diagram of a method of adjusting a clock signal at a processor in response to a voltage droop by adjusting enable signals used to generate the clock signal in accordance with some embodiments.

### DETAILED DESCRIPTION

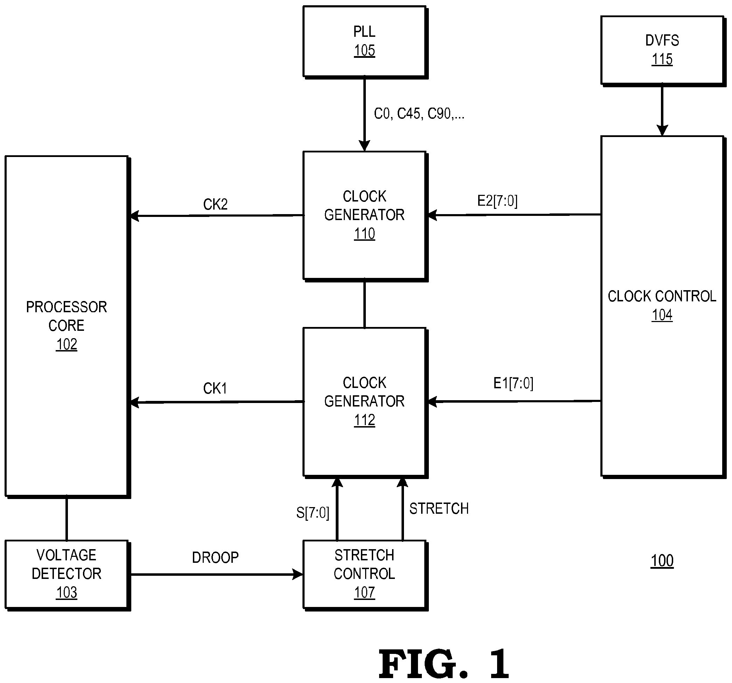

FIGs. 1-4 disclose techniques for adjusting frequencies of one or more clock signals at a processor in response to a voltage droop at the processor. The processor generates at least one clock signal by generating a plurality of base clock signals, each of the base clock signals having a common frequency but a different phase. The processor also generates a plurality of enable signals, wherein each enable signal governs whether a corresponding one of the base clock signals is used to generate the clock signal. The enable signals therefore determine the frequency of the clock signal. In response to detecting a voltage droop, the processor adjusts the enable signals used to generate the clock signal, thereby "stretching", or reducing the frequency of, the clock signal and reducing errors resulting from the voltage droop.

FIG. 1 illustrates a processor 100 that adjusts a clock signal in response to a voltage droop in accordance with some embodiments. The processor 100 can be implemented by any of a variety of compute-enabled electronic devices, such as a server, a desktop computer, a notebook computer, a tablet computer, a compute-enabled portable cellular phone (e.g., a "smart phone"), a compute-enabled watch or other wearable item, a personal digital assistant (PDA), a gaming console, and the like. In the depicted example, the processor 100 includes a processor core 102, a voltage detector 103, a clock control module 104, a phase-locked loop (PLL) 105, a stretch control module 107, clock generators 110 and 112, and a digital voltage and frequency scaling (DVFS) module 115.

The processor core 102 is generally configured to execute sets of instructions (e.g., computer programs) to carry out operations on behalf of an electronic device. To execute the sets of instructions, the processor core includes one or more modules, such as fetch stages, dispatch stages, execution units, memory controllers, input/output interfaces, caches, and the like that are each composed of synchronous logic elements, logic gates, and other components. To synchronize operation of these components, the processor core 102 employs one or more clock signals. In the depicted example, the processor core 102 employs two different clock signals, designated "CK1" and "CK2" to synchronize its operations. In some embodiments, the clock signals CK1 and CK2 can concurrently be at different frequencies, and can be used to synchronize different modules of the processor core 102, or different operations of a module.

To generate the clock signals CK1 and CK2, the processor 100 employs the PLL 105 in conjunction with the clock control module 104 and the clock generators 110 and 112. The clock control module 104 is generally configured to identify a frequency for the clock signals CK1 and CK2 based on any of a number of criteria. In the example of processor 100, the DVFS module 115 is configured to supply frequency information for the clock signals CK1 and CK2 based on operating conditions for the processor 100. For example, in some embodiments the DVFS module 115 receives power mode information for the processor 100, the power mode information indicating a selection of one of a plurality of power states. The power mode information can, for example, be supplied by an operating system executing at the processor core 102, based on information supplied by a performance monitor (not shown) of the processor 100 based on performance characteristics of the processor core 102, and the like. Based on the power mode information, the DVFS module 115 selects a voltage to be supplied to the processor core 102 to be used as a reference voltage for one or more modules of the processor core 102. In addition, based on the power mode the DVFS module 115 supplies frequency information to the clock control module 104, indicating the frequencies for the clock signals CK1 and CK2 corresponding to the selected power state. Based on the frequency information, the clock control module 104 generates enable signals designated E1[7:0] and E2[7:0] to set the frequencies for the clock signals CK1 and CK2, as described further herein.

The PLL 105 is configured to receive a reference clock signal (not shown) from a crystal oscillator (not shown) or other clock source and based on the reference clock signal generate a plurality of base clock signals, wherein each base clock signal is out of phase with the others. In the example of processor 100, it is assumed that the PLL 105 generates eight base clock signals, designated C0, C45, C90, C135, C180, C225, C270, and C315, and collectively referred to as C0-C315. Each of the base clock signals C0-C315 is at least forty-five degrees out of phase with the other base clock signals. In particular, the base clock signal C45 is forty-five degrees out of phase with the base clock signal C0, the base clock signal C90 is ninety degrees out of phase with the base clock signal C0, the base clock signal C135 is one-hundred thirty-five degrees out of phase with the base clock signal C0, and so on, with the number in the clock signal designation indicating the number of degrees the clock signal is out of phase with the clock signal C0.

The clock generators 110 and 112 are each configured to receive a set of enable signals and the base signals C0-C315 and, based on the received enable signals, combine the base signals C0-C315 to generate the respective output clock signal at a frequency based on the enable signals. Thus, for example, the clock generator 112 is configured to receive the enable signals E1[7:0] and based on the enable signals combine the base clock signals C0-C315 to generate the clock signal CK1 at a frequency based on the enable signals E1[7:0]. In some embodiments, each of the enable signals E1 [7:0] corresponds to a different one of the clock signals C0-C315 and the state of the enable signal indicates whether the corresponding clock signal will be applied to one or more logic gates whose output is used to generate the clock. The clock generator 112 thereby implements a frequency divider with respect to the frequency (referred to as the base frequency) of the base clock signals C0-C315, generating the clock signal C1 to have a frequency that is a fraction of the base frequency, wherein the fraction is controlled, at least in part, by the enable signals E1[7:0]. The clock generator 110 is configured similarly to generate the clock signal CK2 based on the base clock signals C0-C315, but the frequency of the clock signal is controlled in part by the enable signals E2[7:0].

To reduce errors due to voltage droop at the processor core 102, the processor 100 employs the voltage detector 103 and the stretch control module 107. The voltage detector 103 is configured to monitor a supply voltage at one or more locations in the processor core 102. In response to detecting the monitored voltage has fallen by a specified threshold amount, the voltage detector 103 asserts an output signal designated "DROOP", thereby indicating that a voltage droop has been detected at the processor core 102.

The stretch control module 107 is configured to generate two sets of signals in response to assertion of the DROOP signal. In particular, in response to assertion of the DROOP signal, the stretch control module 107 asserts a signal designated "STRETCH" to indicate that one or both of the clock signals CK1 and CK2 should be "stretched", or have their frequencies reduced in response to the voltage droop. In addition, the stretch control module 107 generates a set of stretch enable signals, designated S[7:0]. In some embodiments, each of the stretch enable signals corresponds to either the enable signals E2[7:0] or the enable signals E1[7:0]. In response to assertion of the STRETCH signal, the clock generator 112 replaces the enable signals E1[7:0] with the stretch enable signals S[7:0], thereby changing the frequency of the clock signal CK1 in response to the detected voltage droop. Similarly, in response to assertion of the STRETCH signal, the clock generator 110 replaces the enable signals E2[7:0] with the with the stretch enable signals S[7:0], thus changing the frequency of the clock signal CK2.

In at least one embodiment, the stretch control module 107 is configured to monitor the enable signals E2[7:0] and to generate the stretch enable signals S[7:0] to modify the frequency of the clock signal CK1 by a predetermined amount. Thus, for example, the stretch control module 107 can generate the stretch enable signals such that the frequency of the clock signal CK1 is divided by two, relative to the nominal frequency of the clock signal as set by the enable signals E2[7:0], in response to a voltage droop. In some embodiments, the stretch control module changes the frequency of the clock signal CK1 by a variable amount, depending on the size of the voltage droop indicated by the signal DROOP (or by a plurality of control signals represented by the signal DROOP). Thus, for example, if the voltage droop at the processor core 102 exceeds a first threshold, the stretch control module 107 can set the stretch control signals S[7:0] to divide the frequency the clock signal CK1 by 1.25, relative to the nominal frequency set by the enable signals E1[7:0] and if the voltage droop at the processor core 102 exceeds a second threshold, the stretch control module 107 can set the stretch control signals S[7:0] to divide the frequency the clock signal CK1 by 1.25, relative to the nominal frequency.

After a voltage droop, the voltage detector 103 continues to monitor the voltage at the processor core 102. In response to the monitored voltage returning to its pre-droop level, or moving above a threshold level, the voltage detector 103 negates the DROOP signal. In response, the stretch control module 107 negates the STRETCH signal, causing the clock generator 112 to return to generating the CK1 clock signal based only on the enable signals E1[7:0], and the clock generator 110 to return to generating the CK2 clock signal based only on the enable signals E2[7:0]. That is, the clock signals CK1 and CK2 are returned to their pre-voltage-droop frequencies, as set by the clock control module 104.

As described above, in response to a voltage droop at the processor core 102 the processor 100 reduces the clock frequencies of clock signals applied to the processor core by modifying the enable signals used to generate the clock signals. This allows the processor 100 to adapt the clock frequencies in response to a voltage droop using the same circuitry used to generate the original clock signals, thereby reducing the amount of circuitry needed to adapt to a voltage droop. In addition, by employing the same circuitry used to generate the original clock signals, the processor 100 can ensure that the change in the clock frequency is synchronized with a phase of the original clock signals, allowing the clock frequency to change without requiring suspension of activity at the processor core 102.

It will be appreciated that in some embodiments, the stretch control module 107 can adjust set the frequency for the clock signals CK1 and CK2 to different frequencies, including stretching one of the clock signals while maintaining the other clock signal in an unstretched state. For example, the stretch control module 107 can generate two sets of individually and separately controllable stretch control signals S1[7:0] and S2[7:0]. Further, in some embodiments the processor 100 can include multiple voltage detectors to detect voltage droop at different modules of the processor 100, such as one voltage detector to detect a voltage droop at a processor core and a different voltage detector to detect a voltage droop at a cache. Based on signals provided by the different voltage detectors, the stretch control module 107 can individually and selectively adjust the frequency of different clock signals. For example, stretching a clock signal supplied to a cache in response to the corresponding voltage detector detecting a voltage droop at the cache, while maintaining a clock signal supplied to the processor core in an unstretched state because no voltage droop has been detected at the processor core.

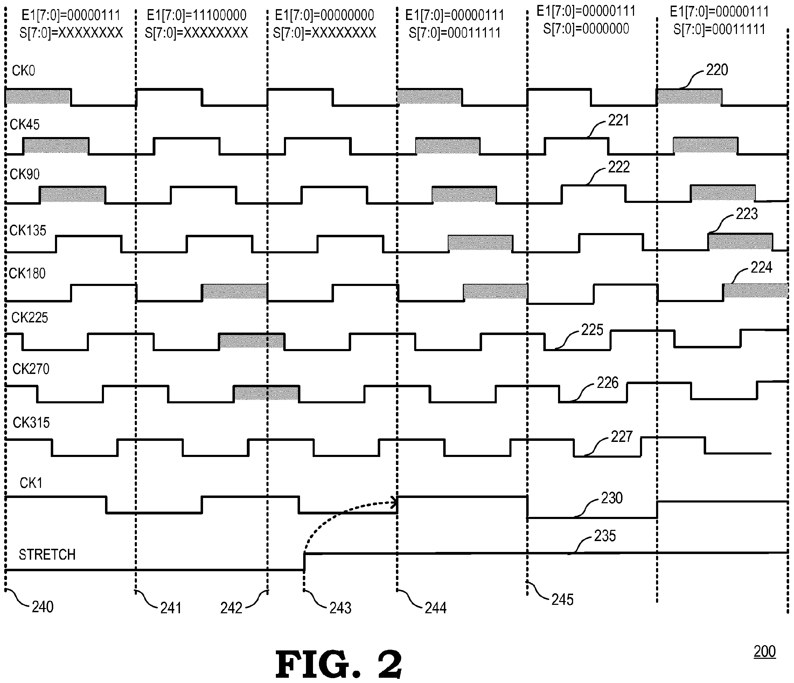

FIG. 2 illustrates a diagram 200 depicting an example operation of the clock generator 110 in accordance with some embodiments. In the depicted example, the diagram 200 illustrates waveforms 220-227, each corresponding to a different one of the base clock signals C0-C315. Thus, for example, waveform 220 represents the base clock signal C0, while waveform 221 represents the base clock signal C45. In addition, diagram 200 illustrates waveform 230, representing the clock signal CK1, and waveform 235, representing the signal STRETCH.

In the illustrated example, between a time 240 and a subsequent time 243, the STRETCH signal is in a negated state, indicating that no voltage droop has been detected at the processor core 102. Accordingly, between time 240 and time 244, the frequency of the clock signal CK1 is controlled by the enable signals E1[7:0] generated by the clock control module 104. In particular, for a first period of the base clock signal CK180, between time 240 and a time 241, the clock control module 104 sets the E1[7:0] enable signals to the value 00000111. In response, between time 240 and time 241, the clock generator 110 generates the CK1 clock signal as the logical "OR" combination of the base clock signals CK0, CK45, and CK90. For the subsequent period of the base clock signal CK180, between time 241 and a time 243 the clock control module 104 sets the E1[7:0] enable signals to the value 11100000. In response, the clock generator 110 generates the CK1 clock signal as the logical "OR" combination of the base clock signals CK180, CK225, and CK270. For the next period of the base clock signal CK180, between time 242 and time 244, the clock control module 104 sets the E1[7:0] enable signals to the value 00000000, so that the CK1 clock signal is negated.

The net effect of the enable signals E1[7:0] as generated by the clock control module 104 between times 240 and 244 is to cause the clock generator 110 to generate the CK1 clock signal to have a frequency equal to the frequency of the base clock signals divided by 1.75. Thus, when the STRETCH signal is negated, the clock generator 110 operates as a frequency divider, wherein it generates the CK1 clock to have a frequency equal to the frequency of the base clock signals divided by a divisor, with the divisor set by the sequence of enable signals generated by the clock generator 110. The clock generator 110 can adjust the divisor by adjusting the sequence of enable signals, in order to set the CK1 clock signal to a frequency indicated by the DVFS module 115 (FIG. 1).

In the depicted example of FIG. 2, at time 243 the STRETCH signal is asserted, indicating that the voltage detector 103 (FIG. 1) has detected a voltage droop at the processor core 102. In response, at the beginning of the next period of the base clock signal CK180 (i.e., at time 244) the clock generator 110 stops employing the E1[7:0] enable signals to generate the clock signal CK1, and begins using the stretch enable signals S[7:0]. Further, the stretch control module 107 generates the stretch enable signals S[7:0] to reduce the frequency of the clock signal CK1 relative to its frequency prior to time 244, thereby adjusting for the voltage droop.

To illustrate, during the period of the base clock signal CK180 between time 244 and a time 245, the stretch control module 107 generates the stretch enable signals S[7:0] to have a value of 00011111. In response, between time 244 and time 245, the clock generator 110 generates the CK1 clock signal as the logical "OR" combination of the base clock signals CK0, CK45, CK90, CK135, and CK180. For the subsequent period of the base clock signal CK180 that follows time 245, the stretch control module 107 generates the stretch enable signals S[7:0] to have a value of 00000000, thereby causing the clock generator 110 to negate the clock signal CK1 for this period of the base clock signal 180. For subsequent periods of the base clock signal CK180 (not shown at FIG. 2) while the STRETCH signal is asserted, the stretch control module 107 alternates the value of the stretch enable signals S[7:0] between 00011111 and 0000000. This sequencing of values for the stretch enable signals results in the clock generator 110 generating the clock signal CK1 to have a frequency that is half of the frequency of the base clock signals. That is, the sequence of values for the stretch enable signals S[7:0] establishes the divisor for the clock generator 110 to have a value of two.

In the depicted example, the clock control module 104 continues to generate values for the enable signals E1[7:0] while the STRETCH signal is asserted. That is, the clock control module 104 generates the enable signals E1[7:0] independently of the state of the STRETCH signal. This allows the processor 100 to quickly switch between clock frequencies, in response to the initiation or cessation of voltage droop, by switching which enable signals are employed by the clock generator 110 to generate the clock signal CK1. Further, it allows the clock generator 110 to synchronize any change in frequency with a period of the clock signal CK1, thereby allowing the processor core 102 to continue operation during the change in frequency. This can improve processing and power efficiency relative to conventional designs that would require the processor core 102 to suspend operations while the frequency of its clock signals are changed in response to initiation or cessation of a voltage droop.

In some embodiments, rather than changing the period of the clock signal CK1 at a rising edge of the clock signal in response to assertion of the STRETCH signal, the clock generator 110 can change the period at a falling edge of the clock signal CK1, so that the first stretched phase of the clock signal CK1 is during a negated phase. For some processors, changing the period of the clock signal during a falling edge can allow the clock generator 110 to begin the stretched period of the clock signal CK1 more quickly, thereby saving additional power.

In addition, in some embodiments when the STRETCH signal is negated, the stretch control module 107 provides the S[7:0] signals that are phase-aligned with the clock signal CK1. Similarly, when the STRETCH signal is asserted, the clock control module 104 provides the E1[7:0] signals as phase-aligned signals to the stretched clock signal CK1. By phase aligning the S[7:0] signals and E1[7:0] signals to the clock signal CK1 (when unstretched and stretched, respectively), the period of the clock signal CK1 can transition at a clock edge, thereby reducing errors resulting from the change in the clock signal CK1.

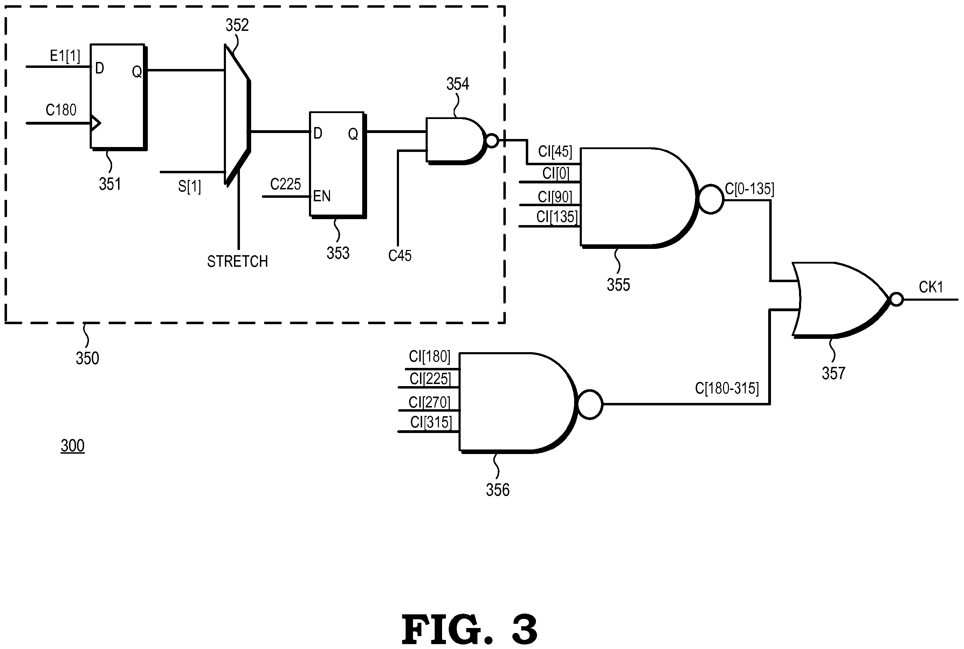

FIG. 3 illustrates a block diagram of a portion 300 of the clock generator 110 in accordance with some embodiments. The portion 300 includes a clock sub-circuit 350, NAND gate 355 and 356, and a NOR gate 357. The sub-circuit 350 includes a latch 351, a multiplexer 352, a latch 353, and a NAND gate 354. The latch 351 includes a data input to receive the enable signal E1[1], a clock input to receive the base clock signal C180, and an output. The multiplexer 352 includes a data input connected to the output of the latch 351, a data input to receive the stretch enable signal S[1], and a control input to receive the STRETCH signal, and an output. The latch 353 includes a data input connected to the output of the multiplexer 352, an enable input to receive the base clock signal C225, and an output. The NAND gate 354 includes an input connected to the output of the latch 353, an input to receive the clock signal C45, and an output.

In operation, the sub-circuit 350 is generally configured to select one of the enable signal E1[1] or the stretch enable signal S[1] as the applicable enable signal for the sub-circuit 350, and to select whether the base clock signal C45 is to be used to as one of the bases of the clock signal CK1. To illustrate, the latch 351 is generally configured to latch the value of the enable signal E1[1] in response to assertion of the base clock signal C180. The multiplexer 352 is configured to select the applicable enable signal based on the state of the STRETCH signal. In particular, in response to the STRETCH signal being negated, the multiplexer 352 applies the output of the latch 351 at its output. Therefore, if the STRETCH signal is negated, the latched value of the enable signal E1[1] is applied to the input of the latch 353. In contrast, if the STRETCH signal is asserted, the multiplexer 352 applies the stretch enable signal S[1] to the input of the latch 353.

The NAND gate 354 is configured to selectively apply the base clock signal C45 at its output based on the state of the applicable enable signal as latched at the latch 353. Thus, if the value of the latched applicable enable signal is negated, indicating the base clock signal C45 is not to be used as a basis of the CK1 clock signal, the NAND gate 354 maintains its output in an asserted state. If the value of the latched applicable enable signal is asserted, the output of the NAND gate will be an inverted representation of the base clock signal C45.

The clock generator 110 includes additional sub-circuits similar to the sub-circuit 350 and are not illustrated at the portion 300 for clarity. In particular, the clock generator 110 includes a corresponding sub-circuit for each base clock signal C0-C315, with each sub-circuit receiving a different one of the enable signals E1[7:0] and a different corresponding one of the stretch enable signals S[7:0]. Each sub-circuit operates similarly to the sub-circuit 350 by selecting the applicable enable signal based on the state of the STRETCH signal, and by selecting, based on the state of the corresponding applicable enable signal, whether the corresponding clock signal is to be used as one of the bases of the clock signal CK1.

The NAND gate 355 includes a plurality of inputs each connected to a different one of the sub-circuits for the base clock signals C0, C45, C90, and C135, and an output. The NAND gate 356 includes a plurality of inputs each connected to a different one of the sub-circuits for the base clock signals C180, C225, C270, and C315. The NOR gate 357 includes an input connected to the output of the NAND gate 355, an input connected to the output of the NAND gate 356, and an output to provide the clock signal CK1. Based on the configuration and connections of the sub-circuits (e.g., sub-circuit 350), the NAND gates 355 and 356, and the NOR gate 357, the CK1 clock signal is generated based on the state of the applicable enable signals, as indicated by the state of the STRETCH signal, and based on the base clock signals selected by the applicable enable signals.

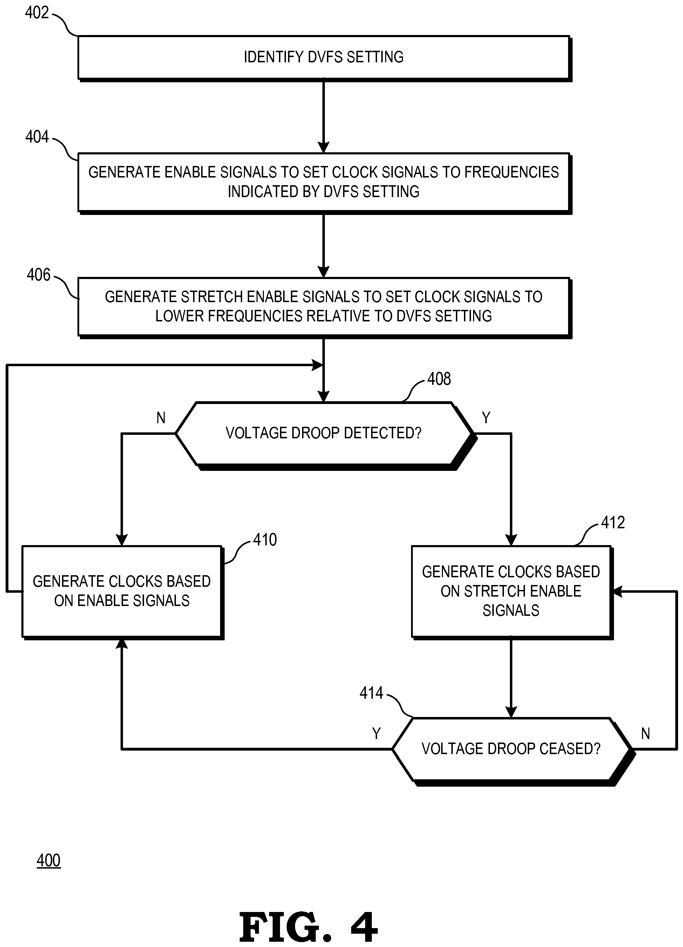

FIG. 4 illustrates a flow diagram of a method 400 of adjusting a frequency of a clock signal in response to detecting a voltage droop at a processor core in accordance with at least one embodiment. For purposes of description, the method 400 is described with respect to an example implementation at the processor 100 of FIG. 1. At block 402, the clock control module 104 identifies, based on information received from the DVFS module 115, the nominal frequency setting for the clock signals CK1 and CK2. At block 404, the clock control module 104 generates the E2[7:0] and E1[7:0] enable signals to set the CK2 and CK1 clock signals to their respective nominal frequency settings. At block 406 the stretch control module 107 generates the stretch enable signals S[7:0] to set the CK1 and CK2 clock signals to a lower frequency relative to their nominal frequencies.

At block 408, the voltage detector 103 monitors the voltage at one or more points of the processor core 102 to identify whether a voltage droop is present. If not, the voltage detector 103 maintains the DROOP signal in a negated state and the stretch control module 107 in turn maintains the STRETCH signal in a negated state. In response, the method flow moves to block 410, and the clock generators 110 and 112 generate the CK2 and CK1 clock signals based on the E2[7:0] and E1[7:0] enable signals, thereby generating the clock signals at their respective nominal frequencies. The method flow then returns to block 408 as the voltage detector 103 continues to monitor the voltage at the processor core 102.

Returning to block 408, in response to detecting a voltage droop the voltage detector 103 asserts the DROOP signal, thereby causing the stretch control module 107 to assert the STRETCH signal. In response, the method flow moves to block 412 and the clock generators 110 and 112 generate the CK2 and CK1 clock signals based on the S[7:0] stretch enable signals, thus generating the clock signals at their slower frequencies. The method flow proceeds to block 414 and the voltage detector 103 monitors whether the voltage at the processor core 102 has returned to its nominal level or range. If not, the method returns to block 412 as the clock generators 110 and 112 maintain the CK2 and CK1 clock signals at their slower frequencies. If, at block 414, the voltage detector 103 identifies that the monitored voltage has returned to its nominal level or range, the method flow proceeds to block 410, where the stretch control module 107 negates the STRETCH signal, causing the clock generators 110 and 112 to return to generating the CK2 and CK1 clock signals based on the E2[7:0] and E1[7:0] enable signals.

In some embodiments, certain aspects of the techniques described above can implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that can cause any benefit, advantage, or solution to occur or become more pronounced are not to be construed as a critical, required, or essential feature of any or all the claims. Moreover, the particular embodiments disclosed above are illustrative only, as the disclosed subject matter can be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method comprising:
generating a first clock signal [230] with a first frequency, wherein the first clock signal [230] is formed from a plurality of base clock signals having a common frequency but a different phase and a first set of enable signals, wherein each enable signal governs whether a corresponding one of the plurality of base clock signals is used to generate the first clock signal, and wherein the forming of the first clock signal is carried out by a logical OR of the base clock signals that are enabled;
in response to detecting a voltage drop [408] at a processor [100], modifying the first set of enable signals to generate a second set of enable signals; and
generating a second clock signal [412] with a second frequency less than the first frequency, based on the second set of enable signals and a plurality of phase-shifted clock signals [220, 221, 222, 223, 224, 225, 226, 227] with the same frequency as the first frequency,
wherein each of the plurality of phase-shifted clock signals [220, 221, 222, 223, 224, 225, 226, 227] is selected or deselected depending on the corresponding second set of enable signals and the selected clock signals are combined using logical OR such that said second clock signal is generated.

2. The method of claim 1, wherein each of the second set of enable signals are selected or deselected depending on the size of the voltage drop [408].

3. The method of claim 1, further comprising:
after detecting the voltage drop [408] at the processor [100], in response to detecting a voltage increase at the processor [100], modifying the second set of enable signals to generate a third set of enable signals; and
generating the first clock signal [230] based on the third set of enable signals [410], wherein generating the first clock signal [230] comprises:
selecting a plurality of phase-shifted clock signals [220, 221, 222, 223, 224, 225, 226, 227] based on the third set of enable signals; and
carrying out a logical OR operation [357] on the selected plurality of phase-shifted clock signals [220, 221, 222, 223, 224, 225, 226, 227] to generate the first clock signal [230] at a higher frequency than the previously generated first clock signal based on the second set of enable signals.

4. The method of claim 1, further comprising:
in response to detecting the voltage drop [408] at the processor [100], modifying the second set of enable signals to generate a third set of enable signals; and
generating a third clock signal based on the third set of enable signals.

5. The method of claim 1, wherein:
the second clock signal [412] is synchronized with the first clock signal [230] to allow the continuity of processor [100] operations without the need to suspend processor [100] activities when switching from the first clock signal [230] to the second clock signal [412], and from the second clock signal [412] back to the first clock signal [230].

6. A processor [100] comprising:
a voltage detection module [103] to detect a voltage drop [408] at the processor [100];
a first clock module [112] to receive a first set of enable signals [410] and a plurality of phase-shifted clock signals [220, 221, 222, 223, 224, 225, 226, 227],
wherein the first clock module [112] generates a first clock signal [230] based on the first set of enable signals [410] and the plurality of phase-shifted clock signals [220, 221, 222, 223, 224, 225, 226, 227], wherein each of the first set of enable signals governs whether a corresponding one of the plurality of phase-shifted clock signals is used to generate the first clock signal, and wherein the forming of the first clock signal is carried out by a logical OR of the plurality of phase-shifted clock signals that are enabled, and
wherein the first clock module [112] generates a second clock signal [412] with a second frequency less than the first frequency, based on the second set of enable signals and a plurality of phase-shifted clock signals [220, 221, 222, 223, 224, 225, 226, 227] with the same frequency as the first frequency, and
wherein each of the plurality of phase-shifted clock signals [220, 221, 222, 223, 224, 225, 226, 227] is selected or deselected depending on the corresponding second set of enable signals, and the selected clock signals are combined using logical OR such that said second clock signal is generated, and
a stretch control module [107] to generate the second set of enable signals in response to the voltage detection module [103] indicating the presence of the voltage drop [408].

7. The processor [100] of claim 6, wherein the stretch control module [107] :
modifies the second set of enable signals to change a frequency of the second clock signal [412] from a second frequency to a third frequency, the third frequency different from the first frequency and the second frequency, and less than the first frequency.

8. The processor of claim 6, wherein the stretch control module [107]:
in response to the voltage detection module [103] indicating an increase [414] in the voltage at the processor [100], modifies the second set of enable signals to generate a third set of enable signals, wherein the first clock module [112]:
selects a subset of the plurality of phase-shifted clock signals [220, 221, 222, 223, 224, 225, 226, 227] based on the third set of enable signals; and
performs a logical OR operation [357] to combine the selected plurality of phase-shifted clock signals [220, 221, 222, 223, 224, 225, 226, 227] to generate the first clock signal [230] at a higher frequency than the previously generated first clock signal based on the second set of enable signals.

## Patentansprüche

1. Verfahren, umfassend
Erzeugen eines ersten Taktsignals [230] mit einer ersten Frequenz, wobei das erste Taktsignal [230] aus einer Vielzahl von Basistaktsignalen mit einer gemeinsamen Frequenz, jedoch einer anderen Phase und einem ersten Satz von Freigabesignalen gebildet wird, wobei jedes Freigabesignal steuert, ob ein entsprechendes der Vielzahl von Basistaktsignalen zum Erzeugen des ersten Taktsignals verwendet wird, und wobei das Bilden des ersten Taktsignals durch ein logisches ODER der Basistaktsignale, die freigegeben sind, durchgeführt wird;
in Reaktion darauf, dass ein Spannungsabfall [408] an einem Prozessor [100] erfasst wird, Modifizieren des ersten Satzes von Freigabesignalen, um einen zweiten Satz von Freigabesignalen zu erzeugen; und
Erzeugen eines zweiten Taktsignals [412] mit einer zweiten Frequenz, die kleiner als die erste Frequenz ist, auf Grundlage des zweiten Satzes von Freigabesignalen und einer Vielzahl von phasenverschobenen Taktsignalen [220, 221, 222, 223, 224, 225, 226, 227] mit der gleichen Frequenz wie die erste Frequenz,
wobei jedes der Vielzahl von phasenverschobenen Taktsignalen [220, 221, 222, 223, 224, 225, 226, 227] in Abhängigkeit des entsprechenden zweiten Satzes von Freigabesignalen ausgewählt oder abgewählt wird und die ausgewählten Taktsignale mittels eines logischen ODER kombiniert werden, sodass das zweite Taktsignal erzeugt wird.

2. Verfahren nach Anspruch 1, wobei jedes des zweiten Satzes von Freigabesignalen in Abhängigkeit der Größe des Spannungsabfalls [408] ausgewählt oder abgewählt wird.

3. Verfahren nach Anspruch 1, ferner umfassend:
nach Erfassen des Spannungsabfalls [408] an dem Prozessor [100] in Reaktion darauf, dass ein Spannungsanstieg an dem Prozessor [100] erfasst wird, Modifizieren des zweiten Satzes von Freigabesignalen, um einen dritten Satz von Freigabesignalen zu erzeugen; und
Erzeugen des ersten Taktsignals [230] auf Grundlage des dritten Satzes von Freigabesignalen [410], wobei das Erzeugen des ersten Taktsignals [230] Folgendes umfasst:
Auswählen einer Vielzahl von phasenverschobenen Taktsignalen [220, 221, 222, 223, 224, 225, 226, 227] auf Grundlage des dritten Satzes von Freigabesignalen; und
Durchführen einer logischen ODER-Operation [357] an der ausgewählten Vielzahl von phasenverschobenen Taktsignalen [220, 221, 222, 223, 224, 225, 226, 227], um das erste Taktsignal [230] bei einer höheren Frequenz als das zuvor erzeugte erste Taktsignal auf Grundlage des zweiten Satzes von Freigabesignalen zu erzeugen.

4. Verfahren nach Anspruch 1, ferner umfassend:
in Reaktion darauf, dass der Spannungsabfall [408] an dem Prozessor [100] erfasst wird, Modifizieren des zweiten Satzes von Freigabesignalen, um einen dritten Satz von Freigabesignalen zu erzeugen; und
Erzeugen eines dritten Taktsignals auf Grundlage des dritten Satzes von Freigabesignalen.

5. Verfahren nach Anspruch 1, wobei:
das zweite Taktsignal [412] mit dem ersten Taktsignal [230] synchronisiert wird, um den kontinuierlichen Betrieb des Prozessors [100] zu ermöglichen, ohne Aktivitäten des Prozessors [100] unterbrechen zu müssen, wenn von dem ersten Taktsignal [230] zu dem zweiten Taktsignal [412] und von dem zweiten Taktsignal [412] zurück zu dem ersten Taktsignal [230] geschaltet wird.

6. Prozessor [100], umfassend:
ein Spannungserfassungsmodul [103] zum Erfassen eines Spannungsabfalls [408] an dem Prozessor [100];
ein erstes Taktmodul [112] zum Empfangen eines ersten Satzes von Freigabesignalen [410] und einer Vielzahl von phasenverschobenen Taktsignalen [220, 221, 222, 223, 224, 225, 226, 227],
wobei das erste Taktmodul [112] ein erstes Taktsignal [230] auf Grundlage des ersten Satzes von Freigabesignalen [410] und der Vielzahl von phasenverschobenen Taktsignalen [220, 221, 222, 223, 224, 225, 226, 227] erzeugt, wobei jedes des ersten Satzes von Freigabesignalen steuert, ob ein entsprechendes der Vielzahl von phasenverschobenen Taktsignalen verwendet wird, um das ersten Taktsignal zu erzeugen, und wobei das Bilden des ersten Taktsignals durch ein logisches ODER der Vielzahl von phasenverschobenen Taktsignalen, die freigegeben sind, durchgeführt wird, und
wobei das erste Taktmodul [112] ein zweites Taktsignal [412] mit einer zweiten Frequenz, die kleiner als die erste Frequenz ist, auf Grundlage des zweiten Satzes von Freigabesignalen und einer Vielzahl von phasenverschobenen Taktsignalen [220, 221, 222, 223, 224, 225, 226, 227] mit der gleichen Frequenz wie die erste Frequenz erzeugt, und
wobei jedes der Vielzahl von phasenverschobenen Taktsignalen [220, 221, 222, 223, 224, 225, 226, 227] in Abhängigkeit des entsprechenden zweiten Satzes von Freigabesignalen ausgewählt oder abgewählt wird und die ausgewählten Taktsignale mittels eines logischen ODER kombiniert werden, sodass das zweite Taktsignal erzeugt wird, und
ein Dehnungssteuermodul [107], um den zweiten Satz von Freigabesignalen in Reaktion darauf zu erzeugen, dass das Spannungserfassungsmodul [103] das Vorliegen des Spannungsabfalls [408] anzeigt.

7. Prozessor [100] nach Anspruch 6, wobei das Dehnungssteuermodul [107]:
den zweiten Satz von Freigabesignalen modifiziert, um eine Frequenz des zweiten Taktsignals [412] von einer zweiten Frequenz in eine dritte Frequenz zu ändern, wobei sich die dritte Frequenz von der ersten Frequenz und der zweiten Frequenz unterscheidet und kleiner als die erste Frequenz ist.

8. Prozessor nach Anspruch 6, wobei das Dehnungssteuermodul [107] :
in Reaktion darauf, dass das Spannungserfassungsmodul [103] einen Anstieg [414] in der Spannung an dem Prozessor [100] anzeigt, den zweiten Satz von Freigabesignalen modifiziert, um einen dritten Satz von Freigabesignalen zu erzeugen, wobei das erste Taktmodul [112]:
einen Teilsatz der Vielzahl von phasenverschobenen Taktsignalen [220, 221, 222, 223, 224, 225, 226, 227] auf Grundlage des dritten Satzes von Freigabesignalen auswählt; und
eine logische ODER-Operation [357] durchführt, um die ausgewählte Vielzahl von phasenverschobenen Taktsignalen [220, 221, 222, 223, 224, 225, 226, 227] zu kombinieren, um das erste Taktsignal [230] bei einer höheren Frequenz als das zuvor erzeugte erste Taktsignal auf Grundlage des zweiten Satzes von Freigabesignalen zu erzeugen.

## Revendications

1. Procédé comprenant :
la génération d'un premier signal d'horloge (230) avec une première fréquence, dans lequel le premier signal d'horloge (230) est formé à partir d'une pluralité de signaux d'horloge de base ayant une fréquence commune mais une phase différente et un premier ensemble de signaux d'activation, dans lequel chaque signal d'activation détermine si l'un correspondant de la pluralité de signaux d'horloge de base est utilisé pour générer le premier signal d'horloge, et dans lequel la formation du premier signal d'horloge est exécutée par un OU logique des signaux d'horloge de base qui sont activés ;
en réponse à la détection d'une baisse de tension (408) au niveau d'un processeur (100), la modification du premier ensemble de signaux d'activation pour générer un deuxième ensemble de signaux d'activation ; et
la génération d'un deuxième signal d'horloge (412) avec une deuxième fréquence inférieure à la première fréquence, sur la base du deuxième ensemble de signaux d'activation et d'une pluralité de signaux d'horloge déphasés (220, 221, 222, 223, 224, 225, 226, 227) avec la même fréquence que la première fréquence,
dans lequel chacun de la pluralité de signaux d'horloge déphasés (220, 221, 222, 223, 224, 225, 226, 227) est sélectionné ou désélectionné en fonction du deuxième ensemble correspondant de signaux d'activation et les signaux d'horloge sélectionnés sont combinés en utilisant un OU logique de manière que ledit deuxième signal d'horloge soit généré.

2. Procédé selon la revendication 1, dans lequel chacun du deuxième ensemble de signaux d'activation est sélectionné ou désélectionné en fonction de la taille de la baisse de tension (408) .

3. Procédé selon la revendication 1, comprenant en outre :
après la détection de la baisse de tension (408) au niveau du processeur (100), en réponse à la détection d'une augmentation de tension au niveau du processeur (100), la modification du deuxième ensemble de signaux d'activation pour générer un troisième ensemble de signaux d'activation ; et
la génération du premier signal d'horloge (230) sur la base du troisième ensemble de signaux d'activation (410), dans lequel la génération du premier signal d'horloge (230) comprend :
la sélection d'une pluralité de signaux d'horloge déphasés (220, 221, 222, 223, 224, 225, 226, 227) sur la base du troisième ensemble de signaux d'activation ; et
l'exécution d'une opération de OU logique (357) sur la pluralité sélectionnée de signaux d'horloge déphasés (220, 221, 222, 223, 224, 225, 226, 227) pour générer le premier signal d'horloge (230) à une fréquence plus élevée que le premier signal d'horloge précédemment généré sur la base du deuxième ensemble de signaux d'activation.

4. Procédé selon la revendication 1, comprenant en outre :
en réponse à la détection de la baisse de tension (408) au niveau du processeur (100), la modification du deuxième ensemble de signaux d'activation pour générer un troisième ensemble de signaux d'activation ; et
la génération d'un troisième signal d'horloge sur la base du troisième ensemble de signaux d'activation.

5. Procédé selon la revendication 1, dans lequel :
le deuxième signal d'horloge (412) est synchronisé avec le premier signal d'horloge (230) pour permettre la continuité d'opération du processeur (100) sans la nécessité de suspendre des activités du processeur (100) lors de la commutation du premier signal d'horloge (230) au deuxième signal d'horloge (412), et du deuxième signal d'horloge (412) à nouveau au premier signal d'horloge (230).

6. Processeur (100) comprenant :
un module de détection de tension (103) pour détecter une baisse de tension (408) au niveau du processeur (100) ;
un premier module d'horloge (112) pour recevoir un premier ensemble de signaux d'activation (410) et une pluralité de signaux d'horloge déphasés (220, 221, 222, 223, 224, 225, 226, 227),
dans lequel le premier module d'horloge (112) génère un premier signal d'horloge (230) sur la base du premier ensemble de signaux d'activation (410) et de la pluralité de signaux d'horloge déphasés (220, 221, 222, 223, 224, 225, 226, 227),
dans lequel chacun du premier ensemble de signaux d'activation détermine si l'un correspondant de la pluralité de signaux d'horloge déphasés est utilisé pour générer le premier signal d'horloge, et dans lequel la formation du premier signal d'horloge est exécutée par un OU logique de la pluralité de signaux d'horloge déphasés qui sont activés, et
dans lequel le premier module d'horloge (112) génère un deuxième signal d'horloge (412) avec une deuxième fréquence inférieure à la première fréquence, sur la base du deuxième ensemble de signaux d'activation et d'une pluralité de signaux d'horloge déphasés (220, 221, 222, 223, 224, 225, 226, 227) avec la même fréquence que la première fréquence, et
dans lequel chacun de la pluralité de signaux d'horloge déphasés (220, 221, 222, 223, 224, 225, 226, 227) est sélectionné ou désélectionné en fonction du deuxième ensemble correspondant de signaux d'activation et les signaux d'horloge sélectionnés sont combinés en utilisant un OU logique de manière que ledit deuxième signal d'horloge soit généré, et
un module de commande d'étirement (107) pour générer le deuxième ensemble de signaux d'activation en réponse au module de détection de tension (103) indiquant la présence de la baisse de tension (408).

7. Processeur (100) selon la revendication 6, dans lequel le module de commande d'étirement (107) :
modifie le deuxième ensemble de signaux d'activation pour changer une fréquence du deuxième signal d'horloge (412) d'une deuxième fréquence à une troisième fréquence, la troisième fréquence étant différente de la première fréquence et la deuxième fréquence, et inférieure à la première fréquence.

8. Processeur selon la revendication 6, dans lequel le module de commande d'étirement (107) :
en réponse au module de détection de tension (103) indiquant une augmentation (414) de la tension au niveau du processeur (100), modifie le deuxième ensemble de signaux d'activation pour générer un troisième ensemble de signaux d'activation, dans lequel le premier module d'horloge (112) :
sélectionne un sous-ensemble de la pluralité de signaux d'horloge déphasés (220, 221, 222, 223, 224, 225, 226, 227) sur la base du troisième ensemble de signaux d'activation ; et
exécute une opération de OU logique (357) pour combiner la pluralité sélectionnée de signaux d'horloge déphasés (220, 221, 222, 223, 224, 225, 226, 227) pour générer le premier signal d'horloge (230) à une fréquence plus élevée que le premier signal d'horloge précédemment généré sur la base du deuxième ensemble de signaux d'activation.
